**Europäisches Patentamt**

**European Patent Office**

**Office européen des brevets**

(19)

(11) Numéro de publication : **0 326 478 B1**

(12)                    **FASCICULE DE BREVET EUROPEEN**

(45) Date de publication du fascicule du brevet :
08.01.92 Bulletin 92/02

(51) Int. Cl.$^5$ : **C10G 11/18**

(21) Numéro de dépôt : **89400192.4**

(22) Date de dépôt : **24.01.89**

(54) **Appareillage pour le craquage catalytique en lit fluidisé d'une charge d'hydrocarbures.**

(30) Priorité : **26.01.88 FR 8800849**

(43) Date de publication de la demande :
**02.08.89 Bulletin 89/31**

(45) Mention de la délivrance du brevet :
**08.01.92 Bulletin 92/02**

(84) Etats contractants désignés :
**AT BE DE ES GB GR IT LU NL**

(56) Documents cités :
**EP-A- 0 129 621**
**US-A- 3 692 667**
**US-A- 4 331 533**
**US-A- 4 675 099**

(73) Titulaire : **Société Anonyme dite: COMPAGNIE DE RAFFINAGE ET DE DISTRIBUTION TOTAL FRANCE**
**84, rue de Villiers**
**F-92300 Levallois Perret (FR)**

(72) Inventeur : **Mauleon, Jean-Louis**
**22, avenue de l'Abreuvoir**
**F-78160 Marly-le-Roi (FR)**
Inventeur : **Sigaud, Jean-Bernard**
**18, Boulevard de la République**
**F-92430 Vaucresson (FR)**

(74) Mandataire : **Jolly, Jean-Pierre et al**
**Cabinet Jolly 54, rue de Clichy**
**F-75009 Paris (FR)**

EP 0 326 478 B1

## Description

La présente invention concerne un appareillage pour le craquage catalytique en lit fluidisé d'une charge d'hydrocarbures. Elle concerne plus particulièrement des perfectionnements apportés aux dispositifs utilisés habituellement dans ce but, en vue d'améliorer les conditions d'injection dans la colonne de craquage du catalyseur régénéré.

On sait que l'industrie pétrolière utilise de façon usuelle des procédés de conversion, dans lesquels des molécules d'hydrocarbures à haut poids moléculaire et à point d'ébullition élevé sont scindées en molécules plus petites, qui peuvent distiller dans des domaines de températures plus faibles, convenant à l'usage recherché.

Le procédé le plus couramment employé dans ce but, à l'heure actuelle, est le procédé dit de craquage catalytique à l'état fluide (en anglais, Fluid Catalytic Cracking, ou encore procédé FCC). Dans ce type de procédé, la charge d'hydrocarbures est vaporisée par mise en contact à haute température avec un catalyseur de craquage, lequel est maintenu en suspension par les vapeurs de la charge. Après que l'on ait atteint par craquage la gamme de poids moléculaires désirée, le catalyseur est séparé des produits obtenus, strippé, réactivé par combustion du coke formé au cours de la réaction, puis remis en contact avec la charge à craquer.

Dans les procédés de ce type, l'abaissement souhaité des points d'ébullition résulte de réactions catalytiques et thermiques contrôlées, le procédé FCC étant naturellement mis en oeuvre de façon à ce que la section de conversion soit en équilibre thermique. Autrement dit, l'alimentation en catalyseur chaud régénéré doit être telle qu'elle puisse répondre aux diverses exigences thermiques de la section réactionnelle, à savoir, en particulier :

— le préchauffage de la charge liquide,

— la vaporisation de cette charge,

— l'apport de calories exigé par les réactions impliquées, lesquelles, globalement, sont endothermiques, et

— les pertes de chaleur du système.

Pour atteindre le plus rapidement possible l'équilibre thermique ci-dessus mentionné, il est donc important, non seulement, d'injecter les charges à craquer finement atomisées dans la zone réactionnelle à une température pouvant atteindre jusqu'à 400°C, mais également d'apporter la chaleur nécessaire par injection du catalyseur régénéré à une température plus élevée (pouvant être comprise entre 600 et 950°C), la chaleur emmagasinée par les grains de catalyseur provenant de la combustion du coke déposé au cours de la réaction de craquage. On peut se référer par exemple au brevet européen n° 191695 déposé par la Demanderesse.

Un tel procédé est habituellement mis en oeuvre dans un appareillage comprenant un réacteur de forme tubulaire, dit élévateur de charge, ou "riser", alimenté à sa base en grains de catalyseur régénéré en quantité réglable.

Le catalyseur est propulsé en phase diluée homogène dans le réacteur tubulaire par injection à l'aide d'un diffuseur de vapeur d'eau ou d'un hydrocarbure léger. Le diffuseur est situé à la base du réacteur, audessous de la ligne d'arrivée du catalyseur régénéré.

La charge à craquer est introduite à un niveau plus élevé du réacteur à l'aide d'un injecteur ou d'un ensemble d'injecteurs.

La colonne réactionnelle débouche à son sommet dans une enceinte qui lui est par exemple concentrique et dans laquelle s'effectuent, d'une part, la séparation des effluents gazeux et du catalyseur, grâce à un séparateur balistique, et, d'autre part, le strippage du catalyseur usé. Les produits de réaction sont épurés de tout catalyseur entraîné dans un système cyclonique, qui peut être logé dans l'enceinte et au sommet duquel est prévue une ligne d'évacuation des effluents, tandis que les particules collectées de catalyseur usé sont réinjectées à la base de l'enceinte. Une ligne alimente en gaz de strippage, généralement de la vapeur d'eau, un diffuseur disposé à la base de l'enceinte.

Les particules de catalyseur usé ainsi strippées sont évacuées à la base de l'enceinte vers un régénérateur à une où deux chambres de combustion.

Dans le régénérateur, les particules de catalyseur sont maintenues en lit fluidisé à l'aide d'un fluide oxydant, qui assure la combustion du coke déposé sur le catalyseur.

Les grains du catalyseur régénéré chaud sont ensuite évacués de régénérateur vers la base de la colonne de craquage, où ils sont réinjectés pour un nouveau cycle.

La circulation du catalyseur entre la colonne de craquage et le régénérateur est assurée par les différences de pression et de niveau entre ces capacités et par les flux de fluides gazeux injectés pour la mise en oeuvre du procédé.

Le raccordement du régénérateur à la colonne réactionnelle en vue du recyclage du catalyseur régénéré a toujours constitué un point crucial dans la conception des unités de craquage catalytique. En effet, il est essentiel que le catalyseur ne séjourne pas à la base du réacteur, mais au contraire qu'il se stabilise et se réhomogénéise rapidement en phase fluidisée. Les formes géométriques les plus diverses ont donc été proposées pour les conduits assurant le transfert du catalyseur, mais les solutions imaginées ont généralement été dictées par des considérations mécaniques plus que par la recherche d'une optimisation du procédé de craquage. En effet, les impératifs imposés par la métallurgie des tubes ont pendant de longues années exigé de travailler avec une paroi externe chaude, avec pour conséquence des problèmes de dilatation, imposant l'utilisation de joints d'expansion du type généralement appelé "aéré", qui nuisent à la circulation des grains du catalyseur, ou le choix de profils de raccordement spéciaux permettant d'éviter ou de limiter l'emploi des joints d'expansion.

On a ainsi proposé des profils de raccordement en U, entre un réacteur et un régénérateur disposés à un même niveau. Il est toutefois difficile de contrôler la circulation du catalyseur et d'éviter la formation de talus dans les parties basses, en particulier en partie basse du U, où le catalyseur a tendance à s'accumuler, ce qui nécessite l'injection d'un fluide d'appoint. Si celui-ci est de l'air, il pose des problèmes de sécurité dans le réacteur. Si c'est de la vapeur d'eau, elle nuit à la stabilité du catalyseur, surtout s'il est à une température élevée. Et si l'on emploie des gaz inertes, ils posent des problèmes de contrôle de l'unité, notamment au niveau du compresseur de gaz secs.

On a donc aussi proposé des profils de circulation en J avec le régénérateur à un niveau plus bas que le sommet de la colonne de craquage et des conduits verticales pour l'évacuation du régénérateur du catalyseur régénéré et pour son introduction dans l'enceinte du réacteur, ces deux conduites étant raccordées par une troisième conduite ayant une pente ascendante de 60° environ qui forme la base du J. Ce profil nécessite lui aussi l'injection d'une quantité importante de gaz vecteur dans la partie ascendante. En outre, le temps de contact de ce gaz avec le catalyseur chaud est relativement long, puisqu'il est supérieur à 3 secondes. Par ailleurs, il implique que l'injection de la charge dans la colonne s'effectue à un niveau plus élevé que l'extrémité supérieur de la partie ascendante du circuit, ce qui est nuisible à une atomisation optimum de cette charge, laquelle suppose une pression d'injection aussi élevée que possible.

Dans un grand nombre d'unités de craquage actuellement en service, on utilise aussi un circuit de raccordement du régénérateur au "riser" dit en Y (voir EP 191695 déjà cité et US-A-4331533). Le conduit d'évacuation du régénérateur est essentiellement vertical et est raccordé à une conduite inclinée d'environ 140 à 150°, elle-même raccordée obliquement à la partie inférieure du riser vertical, d'où le nom de profil en Y. Des renforts puissants doivent être prévus au niveau du raccordement au réacteur tubulaire, pour assurer une rigidité suffisante, et l'on doit utiliser des aciers spéciaux pour essayer de commpenser les dilatations. Ce type de profil présente en outre les inconvénients suivants :

— du fait de l'utilisation d'un joint d'expansion généralement aéré sur la conduite inclinée, la suspension de catalyseur peut se défluidiser partiellement, avec du gaz se rassemblant à la partie supérieure de la section ; il peut en résulter un défaut d'étanchéité et une perte de pression statique ;

— la vanne à glissières de régulation du débit est disposée en aval de ce joint d'expansion et opère en position inclinée, ce qui pose des problèmes d'usure et de flexibilité au corps de vanne ;

— le raccordement en oblique de la conduite inclinée et de la colonne verticale de réaction impose que ces deux éléments n'aient pas le même diamètre, la colonne devant avoir une section plus grande, ce qui nuit au contrôle des vitesses à respecter ;

— le raccord en oblique impose en outre un brusque changement de direction au catalyseur, ce qui rend très difficile sa réhomogénéisation en flux ascendant, avant mélange avec la charge, et entraîne des risques d'érosion à la partie basse du raccord.

Ces inconvénients des appareillages de la technique connue résultent en grande partie des contraintes imposées par la dilatation des conduits utilisés, qui sont en contact direct avec le flux de catalyseur à température élevée (conduites dites à paroi chaude). Les parois utilisées ont donc une épaisseur importante, ce qui interdit de leur imposer un cintrage marqué.

La présente invention vise à remédier à ces inconvénients en utilisant une technologie différente, dans laquelle la température de peau des tubulures raccordant le régénérateur au riser est maintenue proche de la température ambiante, c'est à dire à une température ne dépassant pas, de préférence, 150°C, par un gainage interne de ces tubulures à l'aide d'un revêtement en un matériau réfractaire thermiquement isolant et résistant à l'abrasion.

L'invention a également pour but, par l'utilisation de cette technologie à paroi froide, de réduire l'épaisseur des tubulures de raccordement du régénérateur et du riser et de permettre ainsi leur cintrage suivant des profils différents de ceux de la technique connue, favorisant le déplacement des particules de catalyseur régénéré, sans perte de vitesse de celui-ci et sans perte de pression.

L'invention a aussi pour but, par l'emploi de ces conduites à paroi froide, de supprimer l'utilisation de joints d'expansion sur les tubulures de raccordement du régénérateur et du riser.

Un autre but de l'invention est de pouvoir disposer la ou les vannes de régulation du flux de particules de catalyseur régénéré sur une tubulure verticale du circuit emprunté par ces particules, tout en maintenant cette vanne le plus près possible de la zone d'injection à la base du riser.

L'invention vise également à permettre l'utilisation d'une tubulure de transfert du catalyseur régénéré d'un diamètre égal à celui de la colonne de réaction.

L'invention a enfin pour but de permettre le raccord de cette tubulure à la colonne de réaction suivant un profil curviligne favorisant la réhomogénéisation du catalyseur et évitant l'attrition des particules.

A cet effet, l'invention a pour objet un appareillage pour le craquage en lit fluidisé d'une charge d'hydrocarbures, cet appareillage comprenant un réacteur de type tubulaire essentiellement vertical à flux ascendant, des moyens d'injection dans ledit réacteur de la charge à craquer, des moyens d'introduction à la base de ce réacteur d'au moins un gaz apte à maintenir en lit fluidisé les particules de catalyseur, à la partie supérieure du réacteur des moyens de séparation balistique des particules de catalyseur usé et des hydrocarbures craqués, des moyens de régénération des particules usées par combustion du coke déposé sur celles-ci, des moyens d'acheminement des particules usées dudit réacteur auxdits moyens de régénération, et des moyens de recyclage des particules régénérées depuis lesdits moyens de régénération ou depuis une enceinte tampon auxiliaire jusqu'à la base du réacteur, lesdits moyens de recyclage des particules de catalyseur régénéré à l'alimentation du réacteur comprenant, d'amont en aval, une tubulure de préférence sensiblement verticale d'évacuation des particules régénérées à partir des moyens de régénération et une tubulure sensiblement rectiligne raccordée à ladite tubulure verticale et descendant obliquement à partir de celle-ci vers la base du réacteur à laquelle elle est connectée, ledit appareillage étant caractérisé en ce que la tubulure descendante est raccordée à la tubulure verticale et à la base du réacteur tubulaire par des parties ou des coudes incurvés n'imposant pas de point de rebroussement au trajet des particules, en ce que les angles formés par les axes de raccordement de ladite tubulure descendante avec la tubulure verticale, d'une part, et avec la base du réacteur tubulaire, d'autre part, sont compris respectivement entre 150 et 120° et entre 30 et 60°, et en ce que la partie ou le coude de raccordement de la tubulure descendante à la base du réacteur a un diamètre sensiblement égal à la partie de la base à laquelle elle se raccorde.

Dans une forme de mise en oeuvre de l'invention les angles de raccordement de ladite tubulure descendante avec la tubulure verticale, d'une part, et avec la base du réacteur tubulaire, d'autre part, sont égaux respectivement à environ 135° et 45°.

De préférence, des injections d'un gaz vecteur seront effectuées de préférence tangentiellement à la partie inférieure des coudes de raccordement à la tubulure verticale et au réacteur tubulaire, de manière à faciliter le maintien en phase fluidisée du catalyseur et à imprimer à celui-ci une accélération progressive et homogène, avant sa mise en contact avec la charge à craquer dans la zone réactionelle.

Cette configuration autorise des vitesses de circulation du catalyseur, à la base du réacteur, supérieures à celles de la technique antérieure, où elles sont généralement comprises entre 0,6 et 1,2 m/s. Grâce au dispositif conforme à l'invention, cette vitesse peut être comprise entre 0,6 et 3 m/s et, avantageusement, entre 1,2 et 3 m/s. Ce régime de vitesse est particulièrement avantageux pour passer au régime ascendant dit de "fluidisation rapide" du catalyseur dans la zone réactionnelle, régime qui s'établit pour une gamme de vitesses superficielles allant de 1,0 à 6 m/s.

Les tubulures conformes à l'invention peuvent naturellement être réalisées en tout matériau approprié, mais, selon une forme de mise en oeuvre préférée de l'invention, elles comportent une paroi métallique gainée intérieurement d'une couche d'un matériau thermiquement isolant d'épaisseur telle que la température de peau de la tubulure soit voisine de la température ambiante. Il sera ainsi possible de réduire l'épaisseur de paroi des tubulures et de les cintrer ainsi sans problème, pour les courber aux profils désirés dans les coudes. Il sera également possible de raccorder la tubulure descendante à la base du réacteur tubulaire sans modification brusque du diamètre.

Le métal ou l'alliage constitutif de ces tubulures pourra être un simple acier au carbone moins coûteux que les aciers spéciaux et facile à cintrer, à former ou à souder. Le matériau thermiquement isolant gainant la tubulure pourra être un matériau réfractaire résistant à l'abrasion. Il sera de préférence appliqué en monocouche par la technique dite "coulée-vibrée" et il pourra, en général, être maintenu en position par simple effet de voûte, sans nécessiter de moyens d'ancrage particuliers sur la tubulure.

Un premier avantage de l'appareillage conforme à l'invention réside dans la possibilité de ne plus avoir recours à des joints d'expansion sur les tubulures d'alimentation du réacteur en catalyseur régénéré.

Un autre avantage tient à la possibilité de disposer en position verticale la vanne, qui est généralement du type à glissières, et permet de réguler le débit du catalyseur régénéré. De préférence, elle sera disposée à la partie inférieure de la tubulure verticale d'évacuation du catalyseur régénéré à partir du régénérateur ou d'une enceinte tampon auxiliaire. Comme les tubulures utilisées conformément à l'invention, cette vanne sera elle aussi "à paroi froide", c'est-à-dire en acier ou en un autre alliage ou métal, gainé intérieurement d'un matériau réfractaire thermiquement isolant, seuls les organes internes tels que la glissière de la vanne étant alors appelés à être en contact direct avec le catalyseur chaud et étant en acier inoxydable ou réalisés en des aciers traités en surface et résistants à la température. Les contraintes thermiques auxquelles est soumise cette vanne de régulation étant ainsi fortement réduites, il sera possible d'élever les limites de température du catalyseur régénéré, en utilisant les vannes en continu à 900°C au lieu d'environ 785°C selon la technique connue.

Un autre avantage de l'invention tient encore au fait que les éléments internes de la vanne pourront être continus avec le diamètre de la tubulure sur laquelle elle est montée, en prévoyant des cônes de transition en réfractaire, avec des angles bien spécifiques, pour maintenir et assurer une bonne fluidisation du catalyseur.

Ainsi qu'il a été indiqué, des injections d'un gaz vecteur d'appoint pourront être utilisées pour accélérer les particules du catalyseur au niveau des coudes de raccordement de la tubulure inclinée au réacteur tubulaire. On pourra réaliser ainsi un matelas pneumatique au niveau des génératrices inférieures de ces coudes à l'aide de quantités minimum de gaz et l'on pourra en particulier utiliser, dans ce but, comme gaz de fluidisation, de la vapeur d'eau, sans risque majeur de désactivation du catalyseur, même si celui-ci est très chaud. Ce matelas pneumatique pourra être réalisé de façon connue en soi à l'aide de diffuseur du type "plaque perforée" ou à fentes au-dessous desquelles est placée une arrivée d'air. Les diffuseurs pourront également être constitués de simple tubes arrivant et sciés directement au ras de l'isolant, et judicieusement placés, par exemple en quinconque.

Il sera ainsi possible d'élever la densité du catalyseur dans les tubulures 1 et 2 à une valeur au moins égale à 640 kg/m³.

Cette disposition de l'invention est particulièrement intéressante dans le cas d'une modernisation d'une ancienne installation de craquage catalytique, pour laquelle la pression d'injection de la charge est généralement faible et peut difficilement être changée sans modifier totalement le circuit de préchauffage de cette charge.

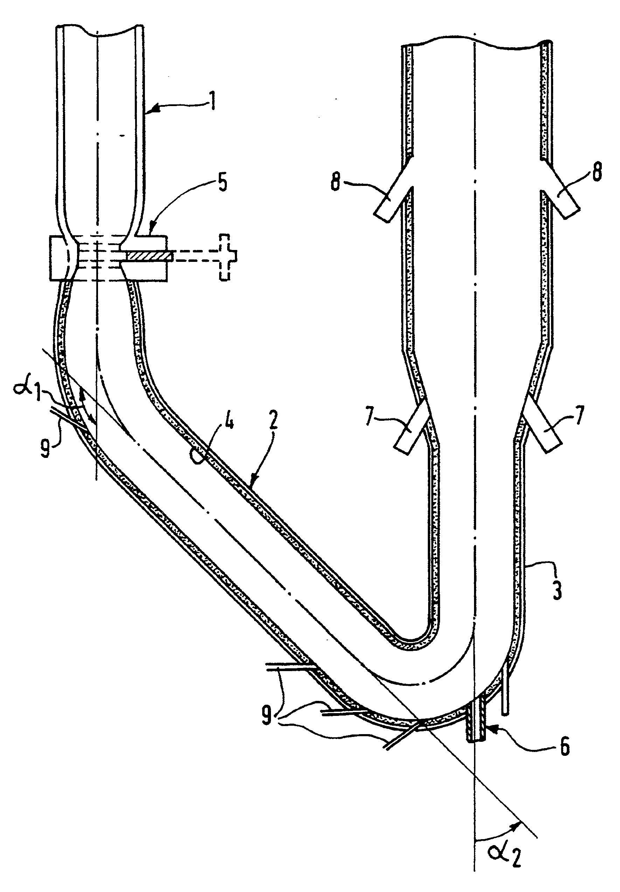

La figure unique du dessin schématique annexé est une coupe verticale partielle d'un appareillage conforme à l'invention pour le craquage catalytique en lit fluidisé d'une charge d'hydrocarbures.

Comme on le voit sur ce dessin, les particules de catalyseur régénéré sont évacuées du régénérateur, non représenté, par une tubulure verticale 1, raccordée à une tubulure 2 dont l'axe descendant est ici incliné d'environ 135° par rapport à celui de la tubulure 1, que se raccorde directement à la base d'un élévateur de charge vertical 3 ou "riser", de forme tubulaire. Les coudes de raccordement de la tubulure inclinée 2 à la tubulure 1 et à la base 3 du riser 3 ont un profil incurvé, sans aucun angle vif, et la tubulure 2 se raccorde à la base du riser 3 sans discontinuité de diamètre. La longueur de la tubulure 2 doit être aussi faible que possible et, dans le cas présent, elle est égale à environ quatre fois le diamètre de cette tubulure. L'angle $\alpha_1$ des axes de la tubulure verticale 1 et de la tubulure descendante 2 est d'environ 135° tandis que l'angle $\alpha_2$ des axes de la tubulure descendante 2 du riser est de l'ordre de 45°.

Les tubulures 1 et 2, de même que le riser 3, sont gainées intérieurement d'une couche 4 d'un matériau réfractaire thermiquement isolant, qui assure à la tubulure une température de peau voisine de la température ambiante et permet de réduire l'épaisseur des conduits, tout en n'utilisant que des métaux ou alliages relativement courants tels qu'un acier au carbone. Il devient ainsi possible de cintrer aisément les tubes pour obtenir les profils incurvés de raccordement caractéristiques de l'invention.

Une vanne 5 de régulation du débit du catalyseur régénéré est disposée à la partie inférieure de la tubulure verticale 1. On peut ainsi utiliser une vanne à glissières, dont le corps prend appui symétriquement sur les guides, sans problèmes d'usure ou de flexibilité de ce corps de vanne. La vanne 5, comme les autres parties de l'appareillage, sera gainée intérieurement d'un matériau réfractaire thermiquement isolant.

On notera qu'il n'est pas nécessaire, sur les tubulures, d'utiliser de joints d'expansion, ce qui élimine les problèmes inhérents à ce type de joints.

De façon usuelle, une ligne 6 alimente ici en vapeur d'eau un diffuseur (non représenté) disposé à la base 3 du riser, en amont des injecteurs 7 de la charge à craquer, en vue de propulser dans le réacteur le catalyseur régénéré sous la forme d'une phase diluée homogène. Des produits de recycle peuvent en outre être introduits dans le réacteur par les injecteurs 8, disposés en aval des injecteurs 7, comme décrit par exemple dans la demande de brevet français N° 2.584.732 de la Demanderesse. Les injecteurs de charge 7 sont disposés aussi bas que possible dans le réacteur 3, au-dessous du niveau de la vanne à glissière 5 et, de préférence, à une distance du coude de raccordement à la tubulure 2 comprise entre environ 1,5 et 5 fois et, de préférence, 2 à 4 fois le diamètre de celle-ci.

Il est naturellement nécessaire d'éviter une défluidisation de la suspension de catalyseur régénéré dans la tubulure 2, d'une part, et au niveau du coude de raccordement de cette tubulure et de la base 3 du riser, d'autre part, ce qui aurait pour effet d'amener le gaz vecteur à se rassembler à la partie supérieure de ces éléments, tandis que les particules de catalyseur se déposeraient à leur partie inférieure. Dans ce but, des injecteurs de gaz 9 sont prévus pour injecter de préférence tangentiellement un fluide d'appoint, de la vapeur d'eau par exemple, au niveau des coudes de raccordement de cette tubulure 2 à la base 3 du riser et à la conduite 1. Ce gaz d'appoint imprime une accélération progressive et homogène aux particules de catalyseur, en contribuant ainsi à les maintenir en phase fluidisée. En outre, le gaz injecté forme un matelas pneumatique le long des génératrices inférieures du tube 2 et des coudes et évitera toute accumulation locale de particules. Afin d'obtenir un effet d'homogénéisation de la phase fluidisée, les orifices des injecteurs 9 seront avantageusement disposés en quinconce sur la face interne du revêtement 4 de réfractaire.

Comme il a été indiqué ci-dessus, il est ainsi possible d'injecter les particules de catalyseur à la base 3 de l'élévateur à des vitesses comprises entre 0,6 et 3 m/s et, plus particulièrement, entre 1,2 et 3 m/s, c'est à-dire supérieures aux vitesses usuelles de la technique antérieure. Ceci est particulièrement propice à un passage en régime ascendant dit de fluidisation rapide (en anglais, "fast fluidization") dans la zone réactionnelle. Un tel régime, qui s'établit par des vitesses de l'ordre de 1 à 6 m/s, présente les caractéristiques suivantes :

— une phase gazeuse quasi-continue, avec peu ou pas de bulles ;

— la formation d'aggrégats très instables de particules de catalyseur, évitant ainsi l'apparition de zones mortes, même le long des parois, où ne se forme pas ou pratiquement pas de couche limite stagnante ;

— l'établissement d'un rétro-mélange intense au sein du lit fluidisé, avec pour résultat un échange optimum de chaleur, conduisant à une vaporisation très rapide de la charge liquide injectée sur un trajet très court, permettant un contrôle rigoureux de la température finale de réaction à moins de ± 1,5°C autour d'une température de consigne.

L'appareillage conforme à l'invention assure ainsi un écoulement sans à-coups du catalyseur, évitant ou limitant par conséquent les risques d'attrition de celui-ci.

## Revendications

1. Appareillage pour le craquage en lit fluidisé d'une charge d'hydrocarbures, cet appareillage comprenant un réacteur de type tubulaire essentiellement vertical à flux ascendant, des moyens (7) d'injection dans ledit réacteur de la charge à craquer, des moyens (6) d'introduction à la base (3) de ce réacteur d'au moins un gaz apte à maintenir en lit fluidisé les particules de catalyseur, à la partie supérieure du réacteur des moyens de séparation balistique des particules de catalyseur usé et des hydrocarbures craqués, des moyens de régénération des particules usées par combustion du coke déposé sur celles-ci, des moyens d'acheminement des particules usées dudit réacteur auxdits moyens de régénération, et des moyens de recyclage (1, 2) des particules régénérées depuis lesdits moyens de régénération ou depuis une enceinte tampon auxiliaire jusqu'à la base du réacteur, lesdits moyens de recyclage des particules de catalyseur régénéré à l'alimentation du réacteur comprenant, d'amont en aval, une tubulure (1) de préférence sensiblement verticale d'évacuation des particules régénérées à partir des moyens de régénération, et une tubulure sensiblement rectiligne (2) raccordée à ladite tubulure verticale (1) et descendant obliquement à partir de celle-ci vers la base (3) du réacteur à laquelle elle est connectée, ledit appareillage étant caractérisé en ce que la tubulure descendante (2) est raccordée à la tubulure verticale (1) et à la base (3) du réacteur par des parties ou des coudes incurvés n'imposant pas de point de rebroussement au trajet des particules, en ce que les angles($\alpha_1$ et $\alpha_2$) formés par les axes de raccordement de ladite tubulure descendante (2) avec la tubulure verticale (1), d'une part, et avec la base (3) du réacteur tubulaire, d'autre part, sont compris respectivement entre 150 et 120° et entre 30 et 60°, et en ce que la partie ou le coude de raccordement de la tubulure descendante (2) à la base (3) du réacteur a un diamètre sensiblement égal à la partie de la base à laquelle elle se raccorde.

2. Appareillage selon la revendication 1, caractérisé en ce que les angles de raccordement de ladite tubulure descendante (2) avec la tubulure verticale (1), d'une part, et avec la base (3) du réacteur tubulaire, d'autre part, sont égaux respectivement à environ 135° et 45°.

3. Appareillage selon l'une des revendications 1 et 2, caractérisé en ce qu'il comporte au moins un injecteur (9) d'un gaz d'appoint débouchant tangentiellement suivant les génératrices inférieures de la partie ou du coude de raccordement de ladite tubulure descendante (9) à ladite tubulure verticale (1).

4. Appareillage selon l'une des revendications 1 et 2, caractérisé en ce qu'il comporte au moins un injecteur (9) d'un gaz d'appoint débouchant tangentiellement suivant les génératrices inférieures de la partie ou du coude de raccordement de ladite tubulure descendante (2) à la base (3) dudit réacteur tubulaire.

5. Appareillage selon l'une des revendications 3 et 4, caractérisé en ce qu'il comprend une pluralité d'injecteurs (9) d'un gaz d'appoint et en ce que les orifices desdits injecteurs sont disposés en quinconce à l'intérieur de ladite partie ou dudit coude de raccordement.

6. Appareillage selon l'une des revendications 1 à 5, comportant au moins une vanne (5) du type à glissières pour la régulation du débit de catalyseur régénéré, caractérisé en ce que ladite vanne est disposée à la partie inférieure de ladite tubulure verticale (1).

7. Appareillage selon l'une des revendications 1 à 6, caractérisé en ce que lesdites tubulures verticale (1) et descendante (2) et les parties ou coudes de raccordement de ces tubulures entre elles et à la base dudit réacteur comprennent une paroi métallique externe doublée intérieurement d'au moins une couche (4) d'un matériau thermiquement isolant.

8. Appareillage selon la revendication 7, caractérisé en ce que lesdites tubulures (1,2), les parties ou coudes de raccordement de ces tubulures entre elles et au réacteur (3) et ladite couche (4) du matériau thermiquement isolant sont telles que la température de peau desdites tubulures et desdites parties ou coudes de raccordement ne dépasse pas la température ambiante de plus de 150°C.

9. Appareillage selon l'une des revendications 7 et 8, caractérisé en ce que la paroi métallique externe desdites tubulures verticale (1) et descendante (2) et des parties ou coudes de raccordement de ces tubulures entre elles et à la base dudit réacteur sont en acier au carbone.

10. Appareillage selon l'une des revendications 7 à 9, caractérisé en ce que ladite couche (4) de matériau thermiquement isolant gainant intérieurement ladite paroi métallique externe provient d'une application en couche unique par la technique dite coulée-vibrée.

11. Appareillage selon la revendication 10, caractérisé en ce que ladite couche de matériau thermiquement isolant est maintenue en position par effet de voûte sans autres moyens de fixation.

12. Appareillage selon l'une des revendications 1 à 11, caractérisé en ce que ladite tubulure verticale (1) et ladite tubulure descendante (3) sont dépourvues de joint d'expansion.

13. Appareillage selon l'une des revendications 3 à 12, caractérisé en ce que les moyens (7) d'injection dans ledit réacteur tubulaire de la charge à craquer sont disposés à un niveau inférieur à celui de la vanne à glissières (5) et à une distance du coude de raccordement de la base (3) de ce réacteur à ladite tubulure descendante (2) comprise entre 1,5 et 5 fois et, de préférence, entre 2 et 4 fois le diamètre de cette tubulure (2).

**Patentansprüche**

1. Einrichtung zum Kracken einer Charge von Kohlenwasserstoffen in der Wirbelschicht mit einem im wesentlichen vertikalen rohrförmigen Reaktor mit aufsteigender Strömung, Mitteln (7) zum Einspritzen der zu krackenden Charge in den Reaktor, Mitteln (6) zum Einführen mindestens eines Gases am Reaktorfuß (3), welches die Katalysatorteilchen in der Wirbelschicht halten kann, am oberen Teil des Reaktors Mitteln zur ballistischen Trennung der Teilchen gebrauchten Katalysators und der gekrackten Kohlenwasserstoffe, Mitteln zur Regeneration der gebrauchten Teilchen durch Verbrennung des auf ihnen abgelagerten Kokses, Mitteln zur Beförderung der gebrauchten Teilchen vom Reaktor zu den Regenerationsmitteln und Mitteln (1, 2) zur Rückführung der regenerierten Teilchen von den Regenerationsmitteln oder von einem Pufferhilfsraum bis zum Reaktorfuß, wobei die Mittel zur Rückführung der Teilchen regenerierten Katalysators zur Speisung des Reaktors von stromaufwärts nach stromabwärts einen vorzugsweise im wesentlichen vertikalen Rohrstutzen (1) zum Abzug der regenerierten Teilchen aus den Regenerationsmitteln und einen im wesentlichen geradlinigen Rohrstutzen (2) umfassen, welcher an den vertikalen Rohrstutzen (1) angeschlossen ist, von demselben weg schräg nach unten zum Reaktorfuß (3) hin abfällt und mit demselben verbunden ist, dadurch **gekennzeichnet**, daß der abfallende Rohrstutzen (2) an den vertikalen Rohrstutzen (1) und an den Reaktorfuß (3) durch nach innen gekrümmte Teile oder Bögen angeschlossen ist, welche der Bahn der Teilchen keinen Umkehrpunkt auferlegen, daß die von den Anschlußachsen des abfallenden Rohrstutzens (2) mit dem vertikalen Rohrstutzen (1) einerseits und mit dem Fuß (3) des rohrförmigen Reaktors andererseits eingeschlossenen Winkel ($\alpha_1$ und $\alpha_2$) jeweils zwischen 150° und 120° bzw. zwischen 30° und 60° liegen und daß das Anschlußteil oder der Anschlußbogen des abfallenden Rohrstutzens (2) an den Reaktorfuß (3) einen Durchmesser aufweist, welcher dem Teil des Fußes im wesentlichen gleich ist, an den er anschließt.

2. Einrichtung nach Anspruch 1, dadurch **gekennzeichnet**, daß die Anschlußwinkel des abfallenden Rohrstutzens (2) mit dem vertikalen Rohrstutzen (1) einerseits und mit dem Fuß (3) des rohrförmigen Reaktors andererseits jeweils etwa gleich 135° bzw. 45° sind.

3. Einrichtung nach Anspruch 1 oder 2, **gekennzeichnet** durch mindestens einen Zusatzgasinjektor (9), welcher tangential zu den unteren Erzeugenden des Anschluß teils oder -bogens des abfallenden Rohrstutzens (2) an den vertikalen Rohrstutzen (1) mündet.

4. Einrichtung nach Anspruch 1 oder 2, **gekennzeichnet** durch mindestens einen Zusatzgasinjektor (9), welcher tangential zu den unteren Erzeugenden des Anschlußteils oder -bogens des abfallenden Rohrstutzens (2) an den Fuß (3) des rohrförmigen Reaktors mündet.

5. Einrichtung nach Anspruch 3 oder 4, **gekennzeichnet** durch mehrere Zusatzgasinjektoren (9), deren Mündungen im Inneren des Anschlußteils oder -bogens zickzackartig versetzt sind.

6. Einrichtung nach einem der Ansprüche 1 bis 3 mit mindestens einem Schieber (3) zur Steuerung des Durchsatzes an regeneriertem Katalysator, dadurch **gekennzeichnet**, daß der Schieber am unteren Teil des vertikalen Rohrstutzens (1) angeordnet ist.

7. Einrichtung nach einem der Ansprüche 1 bis 6, dadurch **gekennzeichnet**, daß der vertikale Rohrstutzen (1), der abfallende Rohrstutzen (2) und die Teile oder Bögen zum Anschluß dieser Rohrstutzen aneinander und an den Reaktorfuß eine äußere Metallwand aufweisen, welche innen mit mindestens einer Schicht (4) aus einem wärmeisolierendem Material ausgekleidet ist.

8. Einrichtung nach Anspruch 7, dadurch **gekennzeichnet**, daß die Rohrstutzen (1, 2), die Teile oder Bögen zum Anschluß dieser Rohrstutzen aneinander und an den Reaktorfuß (3) und die Schicht (4) aus wärmeisolierendem Material derart sind, daß die Außenhauttemperatur der Rohrstutzen und der Anschlußteile oder -bögen die Umgebungstemperatur nicht um mehr als 150°C übersteigt.

9. Einrichtung nach Anspruch 7 oder 8, dadurch **gekennzeichnet**, daß die äußere Metallwand des vertikalen Rohrstutzens (1), des abfallenden Rohrstutzens (2) und der Teile oder Bögen zum Anschluß dieser Rohrstutzen aneinander und an den Reaktorfuß aus Kohlenstoffstahl besteht.

10. Einrichtung nach Anspruch 7, 8 oder 9, dadurch **gekennzeichnet**, daß die Schicht (4) aus wärmeisolierendem Material, welche die äußere Metallwand innen auskleidet, vom einlagigen Aufbringen nach dem sogenannten "Guß vibrierverfahren" herrührt.

11. Einrichtung nach Anspruch 10, dadurch **gekennzeichnet**, daß die Schicht aus wärmeisolierendem Material allein aufgrund des Gewölbeeffekts ohne andere Befestigungsmittel in Position gehalten wird.

12. Einrichtung nach einem der Ansprüche 1 bis 11, dadurch **gekennzeichnet**, daß der vertikale Rohrstutzen (1) und der abfallende Rohrstutzen (2) frei von jeglicher Dehnungsfuge sind.

13. Einrichtung nach einem der Ansprüche 6 bis 12, dadurch **gekennzeichnet**, daß die Mittel (7) zum Einspritzen der zu krackenden Charge in den rohrförmigen Reaktor auf einem Niveau unterhalb des Niveaus des Schiebers (5) und in einem Abstand vom Bogen zum Anschluß des Reaktorfußes (3) an den abfallenden Rohrstutzen (2) angeordnet sind, welcher das Eineinhalb- bis Fünffache, vorzugsweise das Zwei- bis Vierfache des Durchmessers dieses Rohrstutzens (2) ausmacht.

## Claims

1. An apparatus for cracking a hydrocarbon charge in a fluidised bed, said apparatus comprising a reactor of substantially vertical tubular type and with ascending flow, means (7) for injecting the charge to be cracked into said reactor, means (6) for introducing at the base (3) of said reactor at least one gas adapted to maintain the catalyst particles in a fluidised bed, in the upper part of the reactor means for ballistic separation of the spent catalyst particles and cracked hydrocarbons, means for regenerating spent particles by combustion of the coke deposited on thereon, means for directing the spent particles from said reactor to said regeneration means, and means (1, 2) for recycling the regenerated particles from said regeneration means or from an auxiliary buffer enclosure to the reactor base, said means for recycling the regenerated catalyst particles to the feed of the reactor comprising, from upstream to downstream, a preferably substantially vertical pipe (1) for removing the regenerated particles from the regeneration means, and a substantially straight pipe (2) connected to said vertical pipe (1) and descending obliquely from the latter towards the reactor base (3) to which it is, connected, said apparatus being characterised in that the down pipe (2) is connected to the vertical pipe (1) and to the reactor base (3) by curved portions or elbows not imposing a reversal point in the path of the particles, in that the angles ($\alpha_1$ and $\alpha_2$) formed by the axes connecting said down pipe with the vertical tube (1), on the one hand, and with the base (3) of the tubular reactor, on the other hand, are respectively between 150 and 120° and between 30 and 60°, and in that the portion or elbow connecting the down pipe (2) to the reactor base (3) has a diameter which is substantially equal to the part of the base to which it is connected.

2. An apparatus according to claim 1, characterised in that the angles for the connection of said down pipe (2) with the vertical pipe (1), on the one hand, and with the base (3) of the tubular reactor, on the other hand, are respectively equal to about 135° and 45°.

3. An apparatus according to either of claims 1 and 2, characterised in that it comprises at least one injector (9) for a make-up gas discharging tangentially along the lower generators of the portion or elbow connecting said down pipe (9) [sic] to said vertical pipe (1).

4. An apparatus according to either of claims 1 and 2, characterised in that it comprises at least one injector (9) for make-up gas discharging tangentially along the lower generators of the portion or elbow connecting said down pipe (2) to the base (3) of said tubular reactor.

5. An apparatus according to either of claims 3 and 4, characterised in that it comprises a plurality of injectors (9) for a make-up gas, and in that the orifices of said injectors are disposed in a staggered arrangement inside said connecting portion or elbow.

6. An apparatus according to any one of claims 1 to 5, comprising at least one valve (5) of slide-valve type for controlling the flow of regenerated catalyst, characterised in that said valve is disposed in the lower part of said vertical pipe (1).

7. An apparatus according to any one of claims 1 to 6, characterised in that said vertical and down pipes (1) and (2), and the portions or elbows for connecting these pipes to one another and to the base of said reactor, comprise an outer metal wall lined internally with at least one layer (4) of a thermally insulating material.

8. An apparatus according to claim 7, characterised in that said pipes (1, 2), the portions or elbows for connecting these pipes to one another and to the reactor (3) and said layer (4) of thermally insulating material are such that the surface temperature of said pipes and said connecting portions or elbows does not exceed the ambient temperature by more than 150°C.

9. An apparatus according to either of claims 7 and 8, characterised in that the outer metal wall of said vertical and down pipes (1) and (2) and of the portions or elbows for connecting these pipes to one another and to the base of said reactor are made of carbon steel.

10. An apparatus according to any one of claims 7 to 9, characterised in that said layer (4) of thermally insulating material internally covering said outer metal wall results from a single layer application using the vibration-moulding technique.

11. An apparatus according to claim 10, characterised in that said thermally insulating layer is maintained in position by an arching effect without other fastening means.

12. An apparatus according to any one of claims 1 to 11, characterised in that said vertical pipe (1) and said down pipe (3) [sic] are without an expansion joint.

13. An apparatus according to any one of claims 3 to 12, characterised in that the means (7) for injecting the charge to be cracked into said tubular reactor are situated at a lower level than that of the slide valve (5) and at a distance from the elbow connecting the base (3) of said reactor to said down pipe (2) which is between 1.5 and 5 times and, preferably, between 2 and 4 times the diameter of this pipe (2).